# EUROPÄISCHE PATENTSCHRIFT

(11) **EP 4 487 188 B1**
(45) Veröffentlichungstag und Bekanntmachung des Hinweises auf die Patenterteilung: **05.11.2025**
(21) Anmeldenummer: 23710239.7
(22) Anmeldetag: 01.03.2023
(51) Int. Cl.: G05B 19/418

(54) **KOLLABORATIONSFÄHIGES LEITSYSTEM FÜR EINE TECHNISCHE ANLAGE UND BETRIEBSVERFAHREN**
CONTROL SYSTEM FOR A TECHNICAL PLANT WITH COLLABORATION FUNCTIONALITY AND METHOD OF OPERATION
SYSTÈME DE COMMANDE D'UNE INSTALLATION TECHNIQUE AVEC FONCTIONNALITÉ DE COLLABORATION ET PROCÉDÉ DE FONCTIONNEMENT

(30) Priorität: 31.03.2022 EP 22165938
(43) Veröffentlichungstag der Anmeldung: 08.01.2025
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2023/055102
(87) Internationale Veröffentlichungsnummer: WO 2023/186439

(56) Entgegenhaltungen:
- EP-A1- 3 876 046
- WO-A1-2020/074653

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems einer technischen Anlage.

Für die Bedienung und Beobachtung großer technischer Anlagen wie z.B. Fertigungs- oder Prozessanlage werden Operatoren (d.h. Personen zur Bedienung und Beobachtung der Anlage) dynamisierte Anlagenbilder und unterschiedliche grafische Ansichten zur Darstellung von Trendverläufen, Alarmsequenzen oder Zuständen von Prozessobjekten angeboten. In Anlagenbildern können Operatoren weitere Fenster für Analysen oder zur Eingabe von Stellwerten öffnen, zum Beispiel Faceplates, Verlaufsanzeigen von Messwerten und Alarmmeldeanzeigen. Je nach Tätigkeit kann ein Operator eine Vielzahl von Fenstern geöffnet haben und gleichzeitig auch mehrere Eingaben tätigen.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht. Beispielsweise kann der Operator an einem Anlagenbild, d.h. einer grafischen Repräsentation der Anlage bzw. ihrer Komponenten, Änderungen bzw. Anpassungen vornehmen, in dem er Trendanzeigen und/oder Meldefolgen selektiert. Eine derartige Änderung wird als eine "Anwenderselektion" bezeichnet. Die Änderung wird an einen Engineering Station Server weitergeleitet, um sie einem Projekteur für das Engineering der Anlage zur Verfügung zu stellen.

Aus der EP 3 637 205 A1 bzw. der WO 2020/074653 A1 ist ein Leitsystem einer technischen Anlage bekannt, bei dem von einem ersten Bediener eines ersten Operator Station Clients, der mit einem Operator Station Server verbunden ist, vorgegebene Bedieninformationen zur Laufzeit der technischen Anlage derart in einem Speicher hinterlegt werden, dass diese zur Konfiguration einer Bildanzeige für einen zweiten Bediener eines zweiten Operator Station Clients abrufbar und verwendbar sind. Bei den Bedieninformationen kann es sich beispielsweise um Zusammenstellungen handeln, die der erste Bediener mittels des ersten Operator Station Clients vorgenommen hat. Unter einer Zusammenstellung wird beispielsweise eine Sammlung von Trends und Anlagenbildern verstanden, die als "vordefinierte" Selektion immer wieder geöffnet werden kann. Bei den Bedieninformationen kann es sich auch um Anlagenbilder der technischen Anlage handeln.

Als Folge der von dem ersten Bediener in dem Speicher hinterlegten Bedieninformation wird der zweite Operator, insbesondere durch einen grafischen Hinweis auf der Bildanzeige des von ihm genutzten zweiten Operator Station Clients, auf einen Vorschlag des ersten Bedieners hingewiesen, auf der Bildanzeige des zweiten Operator Station Clients die Anlagenbilder des ersten Bedieners anzuzeigen. Der zweite Bediener kann dabei an dem zweiten Operator Station Client nur ein Anlagenbild öffnen, bezüglich dessen er über eine entsprechende Berechtigung verfügt.

Ausgehend hiervon liegt der Erfindung die Aufgabe zugrunde, ein Leitsystem für eine technische Anlage anzugeben, welches eine noch weiter verbesserte Kooperation unter Operatoren in der Bedienung und Beobachtung der technischen Anlage erlaubt.

Diese Aufgabe wird gelöst durch Leitsystem für eine technische Anlage mit den Merkmalen des Anspruchs 1. Außerdem wird die Aufgabe gelöst durch ein Verfahren zum Betreiben eines Leitsystems einer technischen Anlage gemäß Anspruch 14. Vorteilhafte Ausgestaltungen sind jeweils Gegenstand der Unteransprüche.

Ein erfindungsgemäßes Leitsystem umfasst wenigstens einen Operator Station Server und wenigstens einen mit dem Operator Station Server verbundenen Operator Station Client. Dabei ist der Operator Station Server dazu ausgebildet ist, Visualisierungsinformationen an den Operator Station Client zu übertragen. Der Operator Station Client ist dazu ausgebildet, anhand der Visualisierungsinformationen eine Visualisierung für einen Operator der technischen Anlage zu erzeugen.

Das erfindungsgemäße Leitsystem ist dadurch gekennzeichnet, dass es dazu ausgebildet ist, zur Laufzeit der technischen Anlage auf Veranlassung eines ersten Operators zu zumindest einem ersten Zeitpunkt einen zu diesem Zeitpunkt von einem ersten der Operator Station Clients erzeugten aktuellen Zustand der Visualisierung eines Anlagenzustandes zu erfassen und in einem, vorzugsweise nichtflüchtigen, ersten Speicher zu hinterlegen. Das Erfassen des Zustandes der Visualisierung umfasst dabei ein Erfassen von Eingaben des ersten Operators zur Erzeugung des aktuellen Zustandes der Visualisierung und das Abspeichern des Zustandes umfasst ein Abspeichern der erfassten Eingaben.

Das Leitsystem ist dabei dazu ausgebildet, über den ersten Operator Station Client eine Information zu zumindest einem zweiten Operator als Empfänger für den hinterlegten Zustand der Visualisierung von dem ersten Operator entgegenzunehmen und hierdurch den in dem Speicher hinterlegten Zustand der Visualisierung diesem zweiten Operator zuzuordnen.

Der Speicher kann dabei ein Speicher des Leitsystems oder ein cloudbasierter Speicher außerhalb des Leitsystems sein. Bevorzugt ist der Speicher dabei ein Speicherbereich eines Operator Station Servers des Leitsystems. Wenn das Leitsystem mehrere Operator Station Server mit jeweils einem Speicherbereich zur Hinterlegung von Zuständen von Visualisierungen umfasst, sind die Speicherbereiche von Vorteil miteinander repliziert. Ein Operator bzw. Operator Station Client hat dann, unabhängig davon, bei welchem Operator Station Server er sich anmeldet, Zugriff auf sämtliche an ihn weitergeleiteten Zustände von Visualisierungen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Die technischen Anlagen können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus weist das Leitsystem u.a. Mittel zur Visualisierung der technischen Anlage und zu einem Engineering auf. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer, ein Rechner mit einer Großbildanzeige in einer Leitwarte oder dergleichen sein kann, zum Zwecke eines Bedienens und Beobachtens der technischen Anlage auf den Operator Station Server zugreifen.

Unter einer Visualisierung wird vorliegend die grafische Darbietung verstanden, die für den Operator durch den Operator Station Client erfolgt. In der Regel verfügt der Operator Station Client über entsprechende Funktionalitäten, einschlägige Visualisierungsinformationen, die er vom Operator Station Server erhält, zur Erzeugung der beabsichtigten Visualisierung zu nutzen.

Dabei kann die Visualisierung allgemein in an sich bekannter Weise eine grafische Wiedergabe eines Anlagenbildes der technischen Anlage, grafische Fenster mit Verlaufsanzeigen von Messwerten (z.B. Trendanzeigen) der technischen Anlage, Meldungsanzeigen, grafische Objekte, die technische Objekte der technischen Anlage repräsentieren, Textfelder für Eingaben des Operators wie z.B. für Stellwerte eines Reglers und dgl. umfassen. Im Falle einer Prozessanlage kann das Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Die Visualisierung visualisiert dabei einen in der Anlage zu einem bestimmten Zeitpunkt tatsächlich vorliegenden Anlagenzustand, d.h. in der Anlage zu einem bestimmten Zeitpunkt vorliegende Werte von Prozessvariablen, Stellwerte, Regelgrößen, Messwerte, Alarme, Durchflüsse, Füllstände, Operatoreingaben etc.

Der erste Operator kann durch Eingaben die grafischen Objekte, deren Anordnung und Position zueinander, deren Größe sowie Inhalte bestimmen und zur Anzeige bringen. Je nach Tätigkeit und aktueller Bedien- und Beobachtungsaufgabe kann ein Operator eine Vielzahl von Fenstern geöffnet haben und gleichzeitig auch mehrere Eingaben tätigen.

Das erfindungsgemäße Leitsystem ist dazu ausgebildet, zur Laufzeit der technischen Anlage, d.h. während eines Betriebes der technischen Anlage, zu zumindest einem ersten Zeitpunkt einen Zustand der Visualisierung zu erfassen.

Mit dem Begriff "Zustand" ist dabei die aktuelle, von dem ersten Operator durch eigene Eingaben erzeugte bzw. beeinflusste und ihm dargebotene grafische Wiedergabe gemeint. Die Eingaben des ersten Operators zum Beispiel zur Bestimmung der grafischen Objekte, deren Anordnung und Position zueinander, deren Größe sowie Inhalte werden dabei mit als "Zustand" erfasst (z.B. Eingaben wie: Anlagenbild ... öffnen, Faceplate ... öffnen und auf Position ... bewegen, Trendkurve ... für Zeitbereich ... und Zoomfaktor... auf Position ... öffnen, Filtereinstellung ... für Alarmanzeige, usw.).

Dabei kann zu jedem grafischen Fenster, zu jedem sonstigen Objekt und dgl. die von dem ersten Operator eingestellte tatsächliche Größe auf der Ausgabe des Operator Station Clients erfasst werden (beispielsweise 200 x 100 Pixel oder 5% x 5% des Ausgabebildes).

Eine derartige Hinterlegung des Zustandes einer Visualisierung in einem Speicher wird häufig auch als "persistieren" des Zustandes der Visualisierung bezeichnet. Anders formuliert handelt es sich bei dem hinterlegten Zustand der Visualisierung um eine "Persistenz" der Visualisierung.

Die erfasste und in dem ersten Speicher hinterlegte Visualisierung umfasst vorzugsweise eine zu dem ersten Zeitpunkt erfolgende grafische Wiedergabe eines Anlagenbildes der technischen Anlage, eine Meldefolgeanzeige, eine Trendanzeige eines Messwertes aus der technischen Anlage, eine nicht gesicherte Eingabe des Operators in einem Textfeld und/oder einen von dem Operator eingestellten Stellwert eines Reglers.

Zusätzlich ist der erste Operator Station Client ausgebildet, eine Information zu zumindest einem zweiten Operator als Empfänger für den hinterlegten Zustand der Visualisierung von dem ersten Operator entgegenzunehmen und hierdurch den in dem Speicher hinterlegten Zustand der Visualisierung diesem zweiten Operator zuzuordnen.

Diese Zuordnung kann beispielsweise dadurch erfolgen, dass die Hinterlegung des Zustandes der Visualisierung in einem dem zweiten Operator für Weiterleitungen zugeordneten Speicherbereich erfolgt. Alternativ kann auch der Name des zweiten Operators zusammen mit dem Zustand der Visualisierung abgespeichert werden und somit die weitergeleitete Visualisierung für den zweiten Operator auffindbar gemacht werden.

Der erfasste Zustand der Visualisierung kann dann von einem zweiten Operator zu Zwecken einer späteren Wiederherstellung der Visualisierung auf dem ersten Operator Station Client oder einem anderen Operator Station Client verwendet werden,

Es werden dabei nicht nur wie im Stand der der Technik zwischen den Operatoren für deren jeweils eigene Anlagenvisualisierung nutzbare, wiederverwendbare Templates ausgetauscht, sondern es werden die tatsächlich in der Anlage zu einem bestimmten Zeitpunkt (z.B. zu dem ersten Zeitpunkt oder kurz davor) vorliegenden Visualisierungen von Anlagenzuständen ausgetauscht. Operatoren können sich hierdurch bei Bedarf bei der Bedienung und Beobachtung gegenseitig unterstützen. Dies gilt insbesondere für eine oft aufwendigen Ursachenanalyse für Alarme und bei einer Suche nach Anomalien, welche auf Basis des tatsächlich in der Anlage vorliegenden Zustandes (z.B. Werte von Prozessvariablen, Stellwerte, Regelgrößen, Messwerte, Alarme, Operatoreingaben etc.) erfolgen müssen.

Erkennt beispielsweise ein Operator in einem ihm dargebotenen Anlagenbild mit weiteren geöffneten Bildfenstern, wie z.B. Meldefolge- oder Trendanzeigen, eine Anomalie und möchte er einen weiteren Operator zur Beurteilung mit einbeziehen, so kann er seine gegenwärtige Visualisierung mit allen geöffneten Bildfenstern und Einstellungen anderen Operatoren übertragen, auch wenn diese gegenwärtig nicht verfügbar sind, oder sich an einem völlig anderen Ort befinden. Zu diesem Zwecke kann ein Operator den Zustand seiner gegenwärtigen Visualisierung persistieren und mit anderen Operatoren teilen, so dass diese in der Lage sind, die übergebene Visualisierung in ihrer jeweiligen Umgebung (Leitwarte, unterwegs, mobiles Endgerät, usw.) exakt nachzustellen. Die anderen Operatoren erhalten hierdurch alle Informationen für eine "Reproduktion" der Visualisierung des ersten Operators, was weit über einen reinen Bildschirmabzug hinaus geht. Auf Basis der "Reproduktion" können die anderen Operatoren bei Bedarf dann die Visualisierung, d.h. die grafischen Objekte, deren Anordnung und Position zueinander, deren Größe sowie Inhalte an ihre eigenen Rahmenbedingungen (z.B. Größe des Bildschirms) oder Analyseaufgaben (z.B. genauere Detailsicht für ein bestimmtes grafisches Objekt) anpassen.

Es kann somit eine effiziente und verbesserte Kollaboration von mehreren unterschiedlichen Operatoren bei der Bedienung und Beobachtung der technischen Anlage erfolgen.

Bei dem zweiten Operator kann es sich um eine Einzelperson, aber auch um eine Gruppe von Personen handeln.

Das Leitsystem ist dabei vorzugsweise dazu ausgebildet, zur Laufzeit der technischen Anlage auf Veranlassung des ersten Operators zu mehreren verschiedenen ersten Zeitpunkten den zu dem jeweiligen Zeitpunkt auf dem ersten Operator Station Client jeweils aktuellen Zustand der Visualisierung eines Anlagenzustandes in der technischen Anlage zu erfassen und in dem Speicher zu hinterlegen. Der Speicher ist dabei ausgebildet, sämtliche Zustände der Visualisierung der mehreren verschiedenen ersten Zeitpunkte zu speichern. Das Leitsystem ist hierzu dazu ausgebildet, über den ersten Operator Station Client für jeden der hinterlegten Zustände der Visualisierung jeweils eine Information zu einem zweiten Operator als Empfänger des hinterlegten Zustandes der Visualisierung von dem ersten Operator entgegenzunehmen und hierdurch den in dem Speicher hinterlegten Zustand der Visualisierung diesem zweiten Operator zuzuordnen. Mit anderen Worten können für eine noch weiter verbesserte Operator-Kollaboration, **z.B.** für eine noch weiter verbesserte gegenseitige Unterstützung bei Alarmanalysen und Anomalieuntersuchung, in dem Speicher die Zustände mehrere Visualisierungen (bzw. deren Persistenzen) gleichzeitig gespeichert sein und einem anderen Operator verfügbar gemacht werden.

Bevorzugt ist das Leitsystem dazu ausgebildet, auf eine Anforderung des zweiten Operators zu einem zweiten Zeitpunkt, der von dem ersten Zeitpunkt bzw. den mehreren ersten verschiedenen Zeitpunkten unterschiedlich ist, den Zustand der Visualisierung aus dem ersten Speicher oder einem mit dem ersten Speicher replizierten zweiten Speicher abzurufen und eine zu dem zweiten Zeitpunkt aktuell dem zweiten Operator durch einen der Operator Station Clients dargebotene Visualisierung in den aus dem Speicher abgerufenen Zustand zu bringen. Der zweite Operator kann somit den Zeitpunkt des Abrufs der weitergeleiteten Visualisierung selbst bestimmen.

Alternativ kann das Leitsystem dazu ausgebildet sein, automatisiert den Zustand der Visualisierung aus dem ersten Speicher oder einem mit dem ersten Speicher replizierten zweiten Speicher abzurufen und die zu dem zweiten Zeitpunkt aktuell dem zweiten Operator durch einen der Operator Station Clients dargebotene Visualisierung in den aus dem Speicher abgerufenen Zustand zu bringen, wobei das Leitsystem vorzugsweise dazu ausgebildet ist, vor der Aktualisierung eine Abfrage an den zweiten Operator zu erzeugen, ob die Aktualisierung vorgenommen werden soll. Dies ist vor allem geeignet für große Mehrquadranten-Bildanzeigen in großen Leitwarten.

Für eine einfache Auswahl des Empfängers ist das Leitsystem von Vorteil dazu ausgebildet, zur Laufzeit der Anlage in dem Leitsystem angemeldete Operatoren automatisch zu ermitteln und dem ersten Operator als Empfänger für den hinterlegten Zustand der Visualisierung zur Auswahl anzubieten.

Gemäß einer weiteren vorteilhaften Ausgestaltung sind den Operatoren in dem Leitsystem Zugriffsrechte für Visualisierungen zugewiesen und das Leitsystem ist dazu ausgebildet, dem ersten Operator nur diejenigen Operatoren als Empfänger zur Auswahl anzubieten, die ein Zugriffsrecht für die jeweils hinterlegte Visualisierung (bzw. die darin enthaltenen Objekte) haben. Es werden somit Visualisierungen nur an hierfür berechtigte Operatoren weitergeleitet.

Gemäß einer weiteren vorteilhaften Ausgestaltung ist das Leitsystem dazu ausgebildet, von dem ersten Operator in dem Speicher hinterlegte Zustände der Visualisierung zu ermitteln, für jeden der ermittelten hinterlegten Zustände eine Information zu erzeugen und diese Information dem ersten Operator visuell darzustellen. Der erste Operator kann somit auf seinem aktuell benutzten Operator Station Client stets einen Überblick über die von ihm weitergeleiteten Visualisierungen behalten.

Das Leitsystem kann auch dazu ausgebildet sein, für den zweiten Operator als Empfänger in dem Speicher hinterlegte Zustände der Visualisierung zu ermitteln, für jeden der ermittelten hinterlegten Zustände eine Information zu erzeugen und diese Information dem zweiten Operator visuell darzustellen. Der zweite Operator kann somit auf einem aktuell benutzten Operator Station Client an ihn weitergeleitete Visualisierungen hingewiesen werden und stets einen Überblick über die an ihn weitergeleiteten Visualisierungen behalten.

Vorzugsweise weist das Leitsystem hierzu einen Anwenderselektionsdienst auf, der zu einem ersten Teil auf dem zumindest einen Operator Station Server und zu einem zweiten Teil auf dem zumindest einen Operator Station Clients implementiert ist, und der ausgebildet ist, die in dem Speicher hinterlegten Zustände von Visualisierungen zu ermitteln, für jeden der ermittelten hinterlegten Zustände eine Information zu erzeugen und diese Information dem Operator visuell darzustellen.

Gemäß einer weiteren vorteilhaften Ausgestaltung ist der Operator Station Client des zweiten Operators dazu ausgebildet, gleichzeitig in mehreren Feldern, die neben und/oder untereinander angeordnet sind, jeweils unterschiedliche Visualisierungen darzubieten, und von dem zweiten Operator eine Information entgegenzunehmen, in welchem der Felder die dort aktuell dem zweiten Operator durch den Operator Station Client dargebotene Visualisierung in den aus dem Speicher abgerufenen Zustand zu bringen ist. Eine derartige gleichzeitige Darstellung unterschiedliche Visualisierungen in mehreren Feldern wird häufig auch als "Mehrquadranten-Anzeige" oder "Mehrquadranten-Visualisierung" bezeichnet und kommt vor allem auf Großbildanzeigen in Leitwarten zum Einsatz. Gerade für diesen Anwendungsfall ist auch die vorstehend erläuterte automatisierte Abrufung und Darbietung des Zustands der Visualisierung aus dem Speicher für den zweiten Operator von Vorteil.

Die erfindungsgemäße Aufgabe wird auch gelöst durch ein Verfahren zum Betreiben eines Leitsystems einer technischen Anlage, insbesondere Fertigungs- oder Prozessanlage, das wenigstens einen Operator Station Server und wenigstens einen Operator Station Client umfasst, wobei der Operator Station Server dazu ausgebildet, Visualisierungsinformationen an den Operator Station Client zu übertragen, und wobei der Operator Station Client dazu ausgebildet ist, anhand der Visualisierungsinformationen eine Visualisierung für einen Operator der technischen Anlage zu erzeugen. Das Verfahren umfasst dabei:
a) Zu einem ersten Zeitpunkt von einem ersten Operator (O1) Entgegennehmen einer Anforderung, einen aktuellen Zustand der Visualisierung (1) zu erfassen, sowie einer Information zu zumindest einem zweiten Operator (O2) als Empfänger für den Zustand der Visualisierung (1)
b) Hinterlegen des Zustandes in einem ersten Speicher (58), wobei der hinterlegte Zustand dem zweiten Operator (O2) zugeordnet wird,
wobei das Erfassen des Zustandes der Visualisierung ein Erfassen von Eingaben des ersten Operators zur Erzeugung des aktuellen Zustandes der Visualisierung umfasst, und wobei das Abspeichern des Zustandes ein Abspeichern der erfassten Eingaben umfasst.

Die Schritte a) bis d) können dabei auch für mehrere verschiedene erste Zeitpunkten durchlaufen werden, wobei sämtliche Zustände der Visualisierung in dem Speicher hinterlegt werden.

Bei einer vorteilhaften Ausgestaltung des Verfahrens wird auf eine Anforderung des zweiten Operators zu einem zweiten Zeitpunkt, der von dem ersten Zeitpunkt bzw. den mehreren ersten verschiedenen Zeitpunkten unterschiedlich ist, der Zustand der Visualisierung aus dem ersten Speicher oder einem mit dem ersten Speicher replizierten zweiten Speicher abgerufen und die zu dem zweiten Zeitpunkt aktuell dem zweiten Operator durch einen der Operator Station Clients dargebotene Visualisierung in den aus dem Speicher abgerufenen Zustand gebracht.

Gemäß einer weiteren vorteilhaften Ausgestaltung ruft das Leitsystem automatisiert den Zustand der Visualisierung aus dem ersten Speicher oder einem mit dem ersten Speicher replizierten zweiten Speicher ab und bringt die aktuell dem zweiten Operator durch einen der Operator Station Clients dargebotene Visualisierung in den aus dem Speicher abgerufenen Zustand, wobei vorzugsweise das Leitsystem vor der Aktualisierung eine Abfrage an den zweiten Operator zu erzeugt, ob die Aktualisierung vorgenommen werden soll.

Die für das erfindungsgemäße Leitsystem genannten Vorteile gelten entsprechend für das erfindungsgemäße Verfahren.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Operator-Visualisierung für einen ersten Operator einer technischen Anlage auf einem ersten Operator Station Client;
- FIG 2: einen Verfahrensablauf zur Weiterleitung einer Operator-Visualisierung eines ersten Operators an einen zweiten Operator;
- FIG 3: die Visualisierung von FIG 1 mit einer Weiterleitungsfunktion;
- FIG 4: eine Operator-Visualisierung für einen zweiten Operator der technischen Anlage auf einem zweiten Operator Station Client;
- FIG 5: die Operator-Visualisierung von FIG 4 mit der eingebetteten weitergeleiteten Operator-Visualisierung von FIG 1;
- FIG 6: eine Operator-Visualisierung für einen zweiten Operator der technischen Anlage auf einem zweiten Operator Station Client mit einer automatischen Abruffunktion für weitergeleitete Visualisierungen;
- FIG 7: ein erfindungsgemäßes Leitsystem in einer schematischen Darstellung.

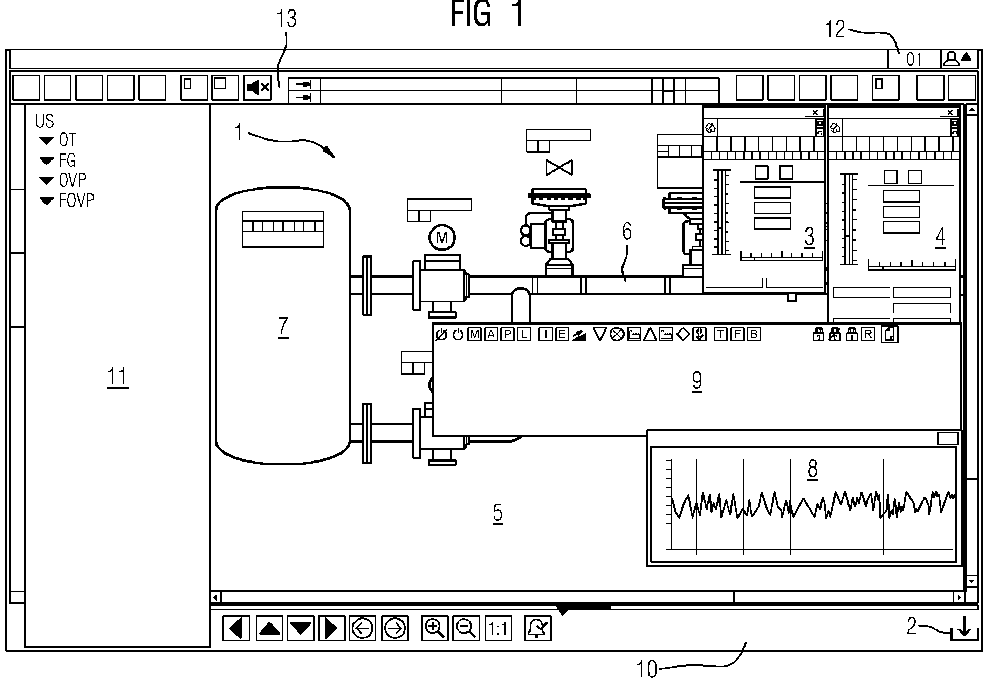

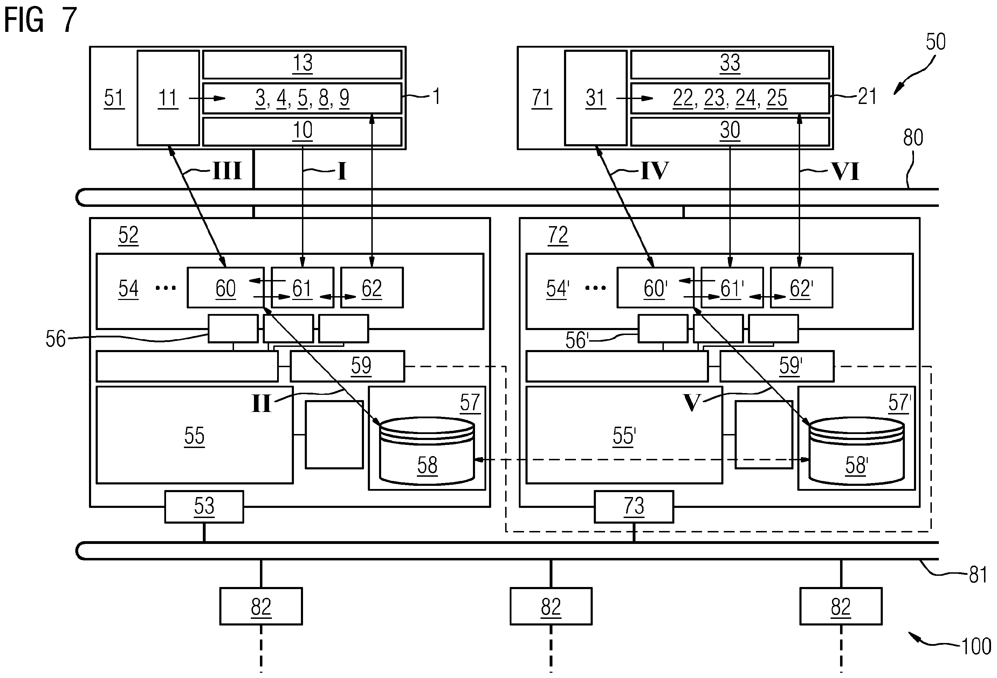

In FIG 1 ist eine Visualisierung dargestellt, welche ein Operator Station Client (vgl. FIG 7) einem ersten Operator O1 einer Prozessanlage zur Bedienung und Beobachtung der Prozessanlage darbietet.

Die Visualisierung umfasst als zentralen Bestandteil eine Anlagenvisualisierung 1. Weiterhin umfasst sie in einem unteren Bereich ein Operator-Bedienfeld 10, in einem oberen Bereich ein Alarmfeld 13 sowie in einem linken Bereich eine Anwenderselektionssicht 11. Rechts oben in einem Feld 12 wird der Name des aktuellen ersten Operators, hier "O1", ausgegeben.

Die Anlagenvisualisierung 1 umfasst ein Anlagenbild 5 mit grafischen Repräsentationen von Rohrleitungen 6 und Prozessobjekten 7 wie einem Tank oder einem Kessel.

Die Anlagenvisualisierung 1 umfasst weiterhin zwei sogenannte Faceplates 3, 4, eine Trendkurve 8 für einen Messwert sowie eine Alarmmeldeanzeige 9.

Die Anlagenvisualisierung 1 wurde dabei von dem ersten Operator individuell in Hinblick auf seine aktuelle Bedien- und Beobachtungsaufgaben erzeugt, die wiederum von dem aktuellen Anlagenzustand abhängen. Die Anlagenvisualisierung 1 visualisiert dabei einen in der Anlage zu einem bestimmten Zeitpunkt tatsächlich vorliegenden Anlagenzustand, d.h. in der Anlage zu einem bestimmten Zeitpunkt vorliegende Werte von Prozessvariablen, Stellwerte, Regelgrößen, Messwerte, Alarme, Durchflüsse, Füllstände, Operatoreingaben etc.

Beispielsweise hat der erste Operator hierzu gezielt ein bestimmtes Anlagenbild 5 geöffnet. Er hat weiterhin gezielt die Faceplates 3,4 geöffnet und mit einer bestimmten Größe an einer bestimmten Stelle im Anlagenbild 5 positioniert. In dem Anlagenbild hat er weiterhin die Trendkurve 8 für einen von ihm ausgewählten Messwert für einen von ihm bestimmten Zeitbereich und Zoomfaktor geöffnet und mit einer von ihm bestimmten Größe an einer bestimmten Stelle im Anlagenbild 5 positioniert. Entsprechendes gilt für die Alarmmeldeanzeige 9.

Es ist auch möglich, dass der erste Operator Eingaben wie beispielsweise neue Stellwerte für Regler gemacht hat, ohne dass er sie aber bis zu dem aktuellen Zeitpunkt bereits aktiv in das Leitsystem übernommen hat, d.h. ohne sie bestätigt zu haben. Weitere Eingaben können beispielsweise Filtereinstellungen für Alarmmeldungen sein.

Für das Öffnen, Auswählen und Positionieren dieser Visualisierungsobjekte sind eine Anzahl von Eingaben des ersten Operators notwendig, die er z.B. mittels einer grafischen Benutzeroberfläche und Benutzerdialogen erledigen kann, die ihm der Operator Station Client bzw. die auf diesem dargebotene Visualisierung 1 ermöglicht. Eine derartige individuelle Erzeugung einer Visualisierung ist ein Beispiel für eine sogenannte "Anwenderselektion".

In der Anwenderselektionssicht 11 werden dem ersten Operator für einen späteren Wiederaufruf Informationen zu von ihm hinterlegten Anwenderselektionen visuell dargestellt. Hierzu zählen Online Trends OT, Faceplate-Gruppen FG, Operator View (Bediener-Sicht) Persistenzen OVP und von ihm an andere Operatoren weitergeleitete und von anderen Operatoren empfangene Operator View (Bediener-Sicht) Persistenzen FOVP. Details zu den Operator View Persistenzen OVP und den weitergeleiteten Operator View Persistenzen FOVP werden später erläutert.

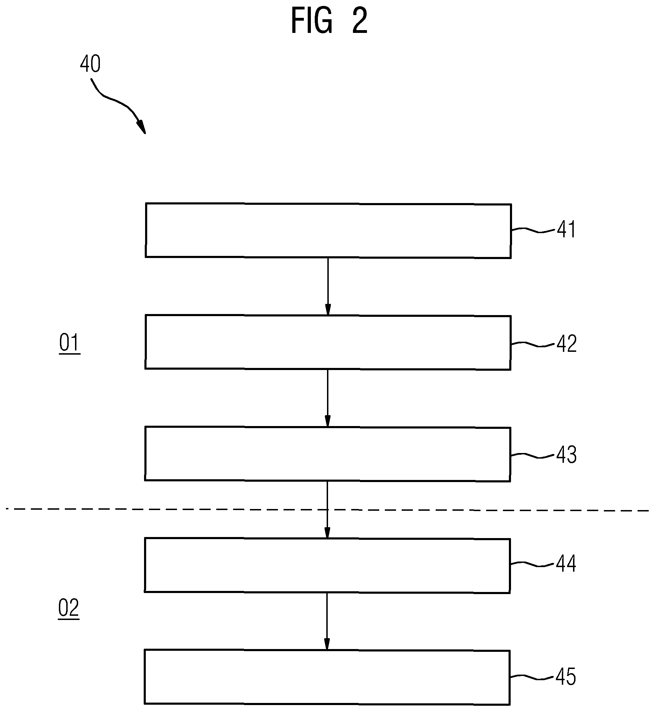

Zuerst soll nun unter Zuhilfenahme von FIG 2 ein erfindungsgemäßer Verfahrensablauf 40 zur Weiterleitung der Visualisierung 1 des Operators O1 an einen zweiten Operator O2 erläutert werden.

In einem ersten Schritt 41 wird zu einem ersten Zeitpunkt eine Anforderung des Operators O1 entgegengenommen, den aktuellen Zustand der Visualisierung 1 des Anlagenzustandes zu erfassen. Es wird nun der aktuelle Zustand erfasst, wobei auch die Eingaben des ersten Operators O1 zur Erzeugung des aktuellen Zustandes der Visualisierung 1 mit als "Zustand" erfasst werden (z.B. Eingaben wie: Anlagenbild ... öffnen, Faceplate ... öffnen und auf Position ... bewegen, Trendkurve ... für Zeitbereich ... und Zoomfaktor... auf Position ... öffnen, Filtereinstellung ... für Alarmanzeige, usw.) Der erfasste Zustand wird im Folgenden auch als "Persistenz" bezeichnet.

In einem zweiten Schritt 42 des Verfahrens wird dieser Zustand in einem Speicher hinterlegt. Dabei werden somit auch die erfassten Eingaben des Operators O1 mit hinterlegt.

In einem dritten Schritt 43 wird von dem Operator O1 eine Information zu dem Operator O2 als Empfänger für den hinterlegten Zustand der Visualisierung 1 entgegengenommen und der in dem Speicher hinterlegten Zustand der Visualisierung dem Operator O2 zugeordnet.

Die Schritte 41 bis 43 können dabei auch für mehrere verschiedene erste Zeitpunkten durchlaufen werden, wobei sämtliche Zustände der dann jeweils aktuellen Visualisierung in dem Speicher hinterlegt und dem Operator O2 oder anderen Operatoren als Empfänger zugeordnet werden.

In einem vierten Schritt 44 wird entweder auf eine Anforderung des Operators O2 zu einem zweiten Zeitpunkt, der von dem ersten Zeitpunkt bzw. den mehreren ersten verschiedenen Zeitpunkten unterschiedlich ist, oder automatisiert durch das Leitsystem, der Zustand der Visualisierung 1 aus dem ersten Speicher oder einem mit dem ersten Speicher replizierten zweiten Speicher abgerufen.

In einem fünften Schritt 45 wird die aktuell dem Operator O2 durch einen der Operator Station Clients dargebotene Visualisierung in den aus dem Speicher abgerufenen Zustand gebracht. Der Operator O2 bekommt nun die an ihn vom dem Operator O1 an ihn weitergeleitete Visualisierung 1 von seinem aktuellen Operator Station Client dargeboten.

Im Fall des Ausführungsbeispiels von FIG 1 ist für die Schritte 41 und 42 in der rechten Ecke des Operator-Bedienfelds 10 von FIG 1 ein Auswahlfeld 2 vorhanden. Durch die Anwahl des Auswahlfeldes 2 (symbolisiert durch einen nach unten gerichteten Pfeil) kann der Operator O1 manuell eine "ad hoc" Persistenz der Anlagenvisualisierung 1 triggern. Dabei wird der Zustand der Visualisierung 1 erfasst und in einem Speicher eines mit dem Operator Station Client verbundenen Operator Station Servers hinterlegt (zu technischen Details hierzu vgl. FIG 7). Dabei werden auch die eingangs erläuterten Eingaben des Operators O1 zur Erzeugung des aktuellen Zustandes der Visualisierung 1 erfasst und abgespeichert.

Es werden auch ein Typ T der Persistenz, der Name O des Operators, der die Persistenz abgelegt hat, und Datum und Uhrzeit D automatisch abgelegt. Um unterschiedliche Operator View Persistenzen besser unterscheiden zu können, kann der Operator O1 bei deren Hinterlegen optional noch einen Kommentar C vergeben.

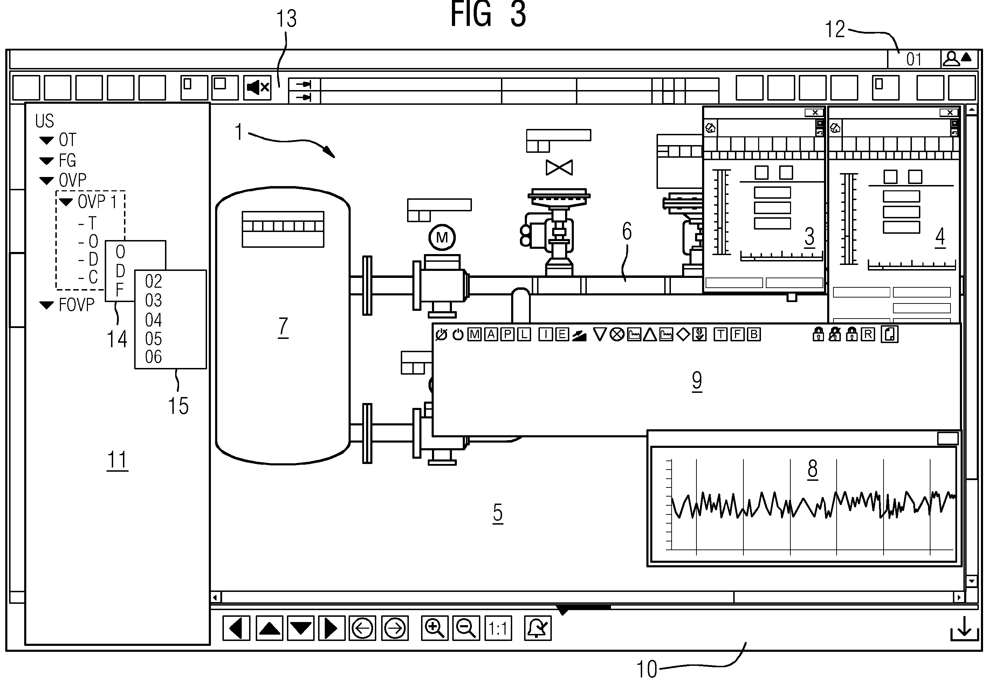

Wie FIG 3 zeigt, wird die von dem Operator O1 angelegte Persistenz des Zustands der Visualisierung 1 dem Operator O1 in der Anwenderselektionssicht 11 unter den abgelegten Operator View Persistenzen OVP als Operator View Persistenz OVP1 zusammen mit dem Typ T, Name O des Operators, Datum/Zeit D und dem Kommentar C visuell dargestellt.

Falls der Operator O1 zu weiteren Zeitpunkten noch weitere Operator View Persistenzen erzeugt und abgelegt hat, werden ihm diese unterhalb der Operator View Persistenz OVP1 zusammen mit dem jeweiligen Typ T, Name O des Operators, Datum/Zeit D und Kommentar C visuell dargestellt.

Über ein Auswahlfenster 14 werden dem Operator O1 nun Optionen für ein Öffnen O, ein Löschen D und ein Weiterleiten F der hinterlegten Persistenz OVP1 angeboten.

Bei Auswahl der Option O für das Öffnen kann der Operator O1 die hinterlegte Persistenz OVP1 öffnen, **d.h.** aus dem Speicher abrufen und auf seinem Operator Station Client zur Anzeige bringen.

Bei Auswahl der Option D für das Löschen wird die hinterlegte Persistenz OVP1 in dem Speicher gelöscht.

Für den Schritt 43 des Verfahrensablaufs 40 von FIG 2 ist die Option F für das Weiterleiten der hinterlegten Persistenz OVP1 vorhanden. Bei Auswahl der Option F für das Weiterleiten öffnet sich für den Operator O1 ein Auswahlfenster 15, in dem ihm alle in dem Leitsystem angemeldeten weiteren Operatoren O2 - O6 angezeigt werden, die ein Zugriffrecht für die Persistenz OVP1 haben.

Das Leitsystem ist hierzu in der Lage, zur Laufzeit der Anlage in dem Leitsystem angemeldete Operatoren automatisch zu ermitteln und dem Operator O1 als Empfänger für die hinterlegte Persistenz OVP1 zur Auswahl anzubieten. Den Operatoren sind dabei in dem Leitsystem Zugriffsrechte für Visualisierungen zugewiesen und das Leitsystem ist dazu ausgebildet, dem Operator O1 nur diejenigen Operatoren als Empfänger zur Auswahl anzubieten, die ein Zugriffsrecht für die Persistenz OVP1 (bzw. die darin enthaltenen Objekte) haben. Hierzu kann beispielsweise ein Anwenderselektionsdienst des Leitsystems genutzt werden (siehe FIG 7), der für jeden Anwender, der sich zur Laufzeit in dem Leitsystem anmeldet, automatisch eine Anwenderselektion erstellt.

Es kann sich bei den Empfängern um Einzelpersonen, aber auch um Personengruppen handeln. Neben Operatoren können zusätzlich auch andere Personen oder Personengruppen, wie **z.B.** Wartungspersonal, Empfänger der Operator View Persistenz OVP1 sein.

In dem Beispiel von FIG 3 wählt der Operator O1 den Operator O2 als Empfänger der Operator View Persistenz OVP1 aus.

Die Operator View Persistenz OVP1 wird hierdurch dem Operator O2 als Empfänger zugeordnet, beispielsweise durch Hinterlegen der Persistenz (d.h. des Zustandes der Visualisierung) in einem dem Operator O2 für Weiterleitungen von Persistenzen zugeordneten Bereich des Speichers oder durch Hinterlegen einer Information über den Operator O2 als Empfänger in dem Speicher. Die hinterlegte Persistenz OVP1 ist somit für den Empfänger O2 auffindbar gemacht.

Wenn in dem Leitsystem mehrere Operator Station Server vorhanden sind, dann wird der Speicherinhalt serverseitig repliziert, d.h. über alle Server verteilt. Die Speicher der Server sind dann repliziert. Ein Operator bzw. Operator Station Client hat dann unabhängig davon, bei welchem der Server er sich anmeldet, Zugriff auf die weitergeleiteten Persistenzen.

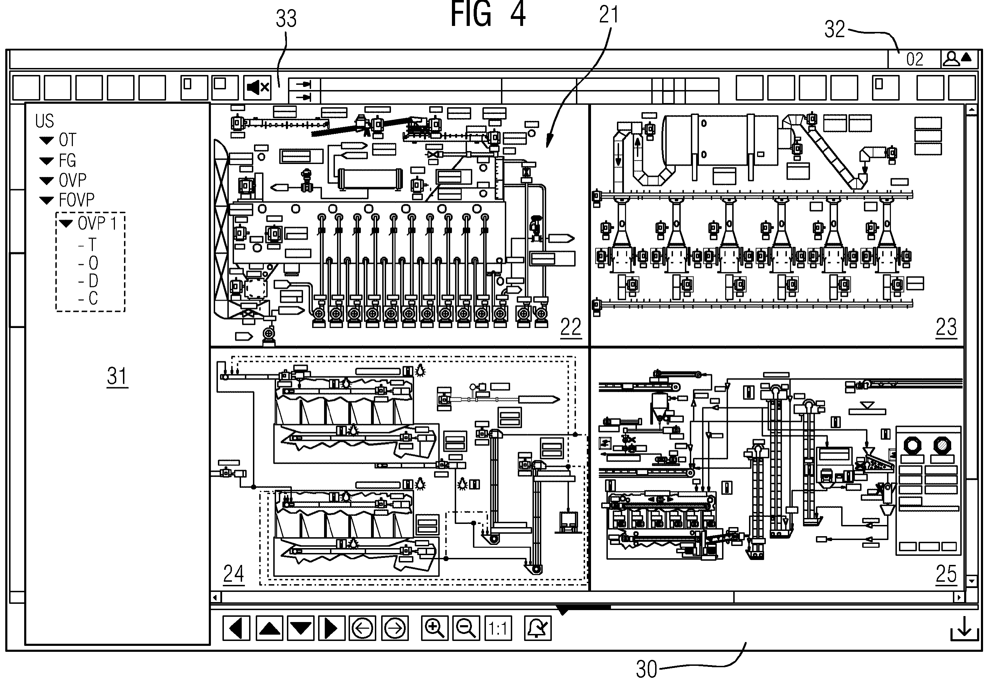

FIG 4 zeigt nun eine Visualisierung, welche ein Operator Station Client (vgl. FIG 7) dem Operator O2 der Prozessanlage zur Bedienung und Beobachtung der Prozessanlage darbietet. Bei dem Operator Station Client handelt es sich im Normalfall um einen anderen Operator Station Client als den von dem Operator O1 für die Erfassung seiner Visualisierung benutzten Operator Station Client. Es kann sich aber grundsätzlich auch um den gleichen Operator Station Client handeln, z.B. im, Fall eines Operatorwechsels im Schichtbetrieb.

Die Visualisierung umfasst als zentralen Bestandteil eine Anlagenvisualisierung 21. Weiterhin umfasst sie in einem unteren Bereich ein Operator-Bedienfeld 30, in einem oberen Bereich ein Alarmfeld 33 sowie in einem linken Bereich eine Anwenderselektionssicht 31. Rechts oben in einem Feld 32 wird der Name des aktuellen Operators, hier "O2", ausgegeben.

Die Anlagenvisualisierung 21 ist als eine Mehrfeld- bzw. Mehrquadranten-Visualisierung ausgebildet, hier als eine Vier-Quadranten-Visualisierung mit vier Quadranten. In den vier Quadranten sind jeweils unterschiedliche (Teil-) Anlagenvisualisierungen 22, 23, 24, 25 dargeboten.

In der Anwenderselektionssicht 31 werden dem Operator O2 Informationen über von ihm hinterlegte Anwenderselektionen visuell dargestellt. Hierzu zählen Online Trends OT, Faceplate-Gruppen FG und Operator View (Bediener-Sicht) Persistenzen OVP. Außerdem werden von ihm an andere Operatoren weitergeleitete und an ihn von anderen Operatoren weitergeleitete (bzw. empfangene) Operator View (Bediener-Sicht) Persistenzen FOVP visuell dargestellt.

Im Ausführungsbeispiel hat der Operator O1 die Operator View Persistenz OVP1 an den Operator O2 weitergeleitet, weshalb sie dem Operator O2 nun unter den weitergeleiteten Operator View (Bediener-Sicht) Persistenzen FOVP visuell dargestellt wird. Der Operator O2 kann nun zu einem beliebigen Zeitpunkt die Operator View Persistenz OVP1 öffnen und evaluieren.

Falls an den Operator O2 noch weitere Operator View Persistenzen weitergeleitet wurden, werden ihm diese unterhalb der Operator View Persistenz OVP1 visuell dargestellt.

Damit der Operator O2 auch bei geschlossenem Anwenderselektionsfenster für weitergeleitete Operator View Persistenzen FOVP an ihn weitergeleitete Operating View Persistenzen bemerken kann, wird er über die Auswahlschaltfläche zum Öffnen der Anwenderselektionen entsprechend notifiziert (z.B. rot blinkend).

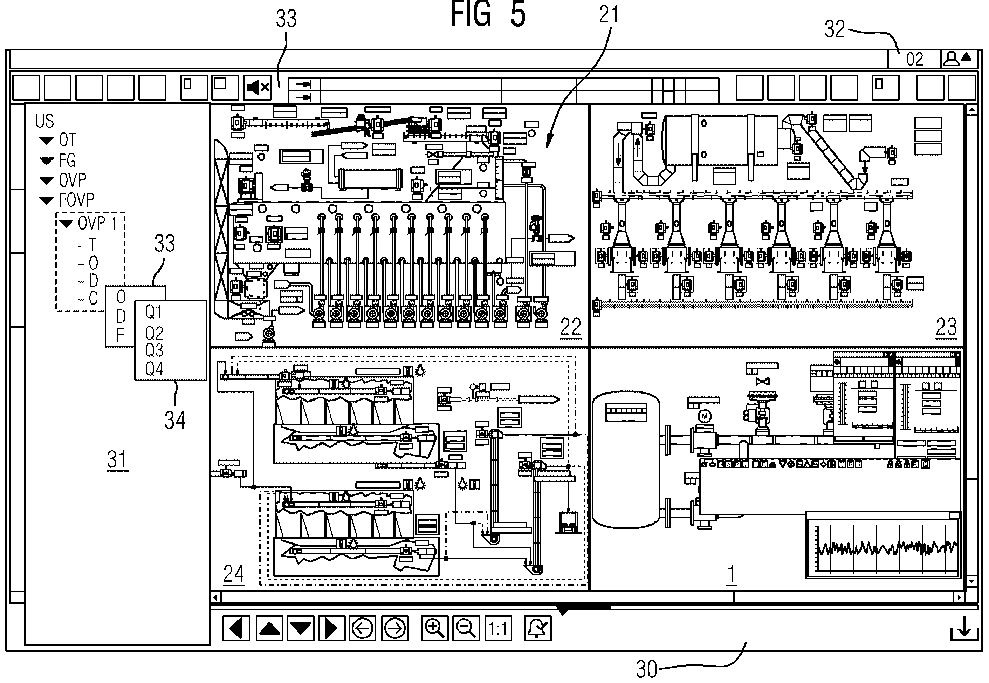

Wie anhand FIG 5 dargestellt ist, werden dem Operator O2 über ein Auswahlfenster 33 nun Optionen für ein Öffnen O, ein Löschen D und eine Weiterleiten F der an ihn weitergeleiteten Persistenz OVP1 angeboten.

Bei Auswahl der Option O für das Öffnen kann der Operator O2 die weitergeleitete Persistenz OVP1 öffnen, d.h. aus dem Speicher abrufen und die aktuell auf seinem Operator Station Client dargebotene Visualisierung in den Zustand der hinterlegten Persistenz OVP1 bringen.

Bei Auswahl der Option D für das Löschen wird die an ihn weitergeleitete Persistenz OVP1 in dem Speicher gelöscht.

Mit der Option F kann er die an ihn weitergeleitete Persistenz OVP1 wiederum an andere Operatoren weiterleiten.

Bei Auswahl der Option O für das Öffnen wird dem Operator O1 über ein weiteres Auswahlfeld 34 eine Auswahl angeboten, in welchem der vier Quadranten Q1 - Q4 der Vier-Quadranten-Visualisierung die Persistenz OVP1 zur Anzeige gebracht werden soll.

Im Fall von FIG 5 wird angenommen, dass sich der Operator O2 für den vierten Quadranten Q4 entscheidet. Es wird deshalb nun die Operator View Persistenz OVP1 aus dem Speicher abgerufen und die bisher im Quadranten Q4 zur Anzeige gebrachte Anlagenvisualisierung 25 wird nun durch die Anlagenvisualisierung 1 auf Basis der Operator View Persistenz OVP1 ersetzt.

Da die Operator View Persistenz OVP1 nicht nur einen Bildschirmabzug darstellt, sondern auch die Eingaben zur Erzeugung der Visualisierung mitberücksichtigt werden, kann dem Operator O2 eine "Reproduktion" der Visualisierung 1 des Operators O1 bereitgestellt werden. Auf Basis der "Reproduktion" kann der Operator O2 bei Bedarf dann die ihm dargebotene Visualisierung, d.h. die grafischen Objekte, deren Anordnung und Position zueinander, deren Größe sowie Inhalte an seine eigenen Rahmenbedingungen (z.B. Größe des Bildschirms) oder seine Analyseaufgaben (z.B. genauere Detailsicht für ein bestimmtes grafisches Objekt) anpassen.

Es kann somit eine effiziente Kollaboration von mehreren unterschiedlichen Operatoren bei der Bedienung und Beobachtung der technischen Anlage erfolgen.

Bei Rückfragen des Operators O2 kann ausgehend von der weitergeleiteten Persistenz OVP1 von dem Operator O2 eine neue Operator View Persistenz angelegt, kommentiert und an den Operator O1 gesendet werden.

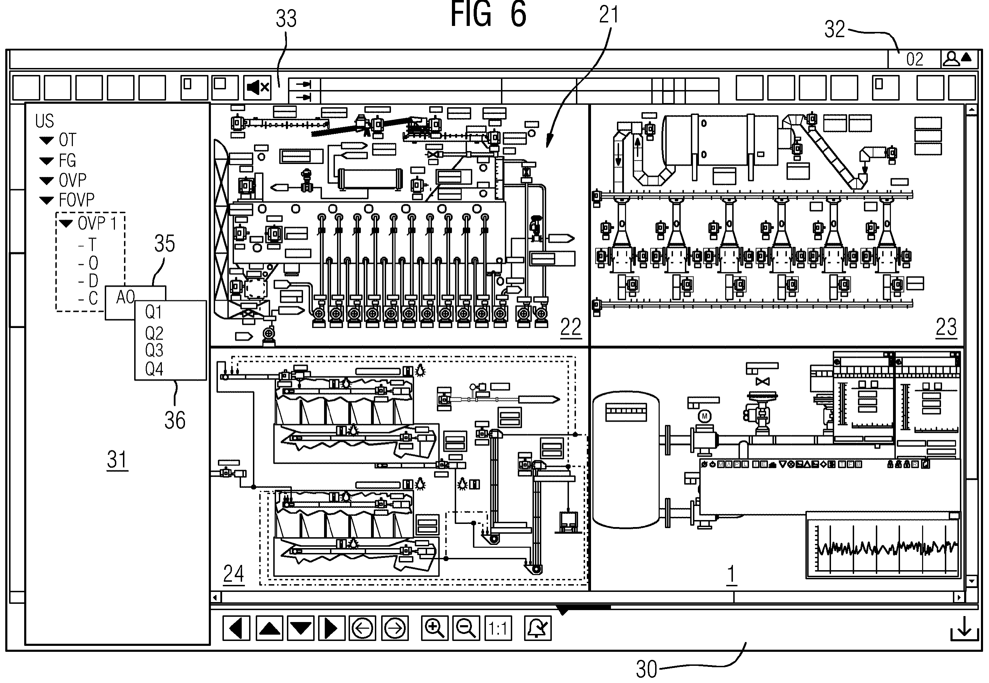

Alternativ kann - wie anhand FIG 6 erläutert wird - der Operator O2 bestimmen, dass an ihn weitergeleitete Operator View Persistenzen automatisiert aus dem Speicher abgerufen und eine in einem Quadrant der Vierquadranten-Visualisierung dargebotene Visualisierung in den aus dem Speicher abgerufenen Zustand gebracht wird.

Dem Operator O2 kann hierbei über ein Auswahlfenster 35 eine Option AO für ein automatisches Öffnen der weitergeleiteten Operator View Persistenzen auswählen. In einem nachfolgenden Auswahlfenster 36 wird ihm eine Auswahl angeboten, in welchem der vier Quadranten Q1 - Q4 der Vier-Quadranten-Visualisierung die Operator View Persistenzen automatisiert zur Anzeige gebracht werden sollen.

Im Fall von FIG 6 wird angenommen, dass sich der Operator O2 für den vierten Quadranten Q4 entscheidet.

Die Operator View Persistenz OVP1 wird deshalb nun zeitnah nach ihrem Weiterleiten an den Operator O2 automatisch geöffnet, **d.h.** Operator View Persistenz OVP1 wird automatisch aus dem Speicher abgerufen und die bisher aktuell im Quadranten Q4 zur Anzeige gebrachte Anlagenvisualisierung 25 wird durch die Anlagenvisualisierung 1 auf Basis der Operator View Persistenz OVP1 ersetzt.

In FIG 7 ist ein erfindungsgemäßes Leitsystem 50 für die Bedienung und Beobachtung einer Prozessanlage 100 schematisch dargestellt. Das Leitsystem 50 umfasst die zuvor bereits genannten Operator Station Clients 51, 71 und Operator Station Server 52, 72. Die Operator Station Server 52, 72 und die Operator Station Clients 51, 71 sind über einen Terminalbus 80 miteinander und optional mit nicht dargestellten weiteren Komponenten des Leitsystems 50 verbunden. Bei dem Operator Station Client 51 handelt es sich beispielsweise um einen Operator-Einzel-Arbeitsplatz und bei dem Operator Station Client 71 um eine 4-Quadranten-Großanzeige in einer Leitwarte.

Ein Operator kann zum Zwecke des Bedienens und Beobachtens über einen der Operator Station Clients 51, 71 mittels des Terminalbus 80 auf die Operator Station Server 52, 72 zugreifen. Beispielsweiser arbeitet der Operator O1 an dem Operator Station Client 51 und der Operator O2 an dem Operator Station Client 71. Der Terminalbus 80 kann, ohne sich darauf zu beschränken, beispielsweise als Industrial Ethernet ausgebildet sein.

Die Operator Station Server 52, 72 weisen jeweils eine Geräteschnittstelle 53 bzw. 73 auf, die mit einem Anlagenbus 81 verbunden ist. Über diese Geräteschnittstelle 53 bzw. 73 kann der Operator Station Server 52, 72 mit Automatisierungsgeräten 82 sowie mit optional vorhandenen weiteren Komponenten der Prozessanlage 100 wie Peripheriegeräten (nicht dargestellt) kommunizieren. Der Anlagenbus 81 kann, ohne sich darauf zu beschränken, beispielsweise als Industrial Ethernet ausgebildet sein.

Auf den Operator Station Servern 52, 72 sind (unter anderem) ein Visualisierungsdienst 54 bzw. 54', ein Prozessabbild 55 bzw. 55', ein Verteilungsdienst 59 bzw. 59', ein Anwenderselektionsdienst 60 bzw. 60' und ein Anwenderselektionsmanager 57 bzw. 57' mit einem Speicher 58 bzw. 58' implementiert.

Der Visualisierungsdienst 54, 54' initiiert eine Übertragung von Visualisierungsinformationen an den Operator Station Client 51 bzw. 71. Der Operator Station Client 51 bzw. 71 ist dazu ausgebildet, eine Visualisierung, d.h. eine grafische Darbietung, insbesondere von Anlagenbildern, zum Bedienen und Beobachten der Prozessanlage 100 darzustellen. Der Visualisierungsdienst 54, 54' umfasst ein Anzeige-Objekt-Modell (Screen Object Model) 62 bzw. 62' in dem der Zustand der Visualisierung 1 bzw. 21 gespeichert ist, d.h. inklusive aller Eingaben des Operators O1 bzw. O2 zur Erzeugung der Visualisierung.

In dem Prozessabbild 55 bzw. 55' ist eine Momentaufnahme der (Signal-) Zustände von mit dem Operator Station Server 52 bzw. 72 verbundenen Geräten und/oder Applikationen hinterlegt.

Ein Alarmdienst 56 bzw. 56' kann Alarmmeldungen aus dem Prozessabbild 55 bzw. 55' auslesen und beispielsweise eine grafische Aggregation der Alarmmeldungen erzeugen, die der Operator Station Client 51 bzw. 71 darstellen kann.

Der Anwenderselektionsdienst 60 bzw. 60' hat Zugriff auf den Speicher 58 bzw. 58' des Operator Station Servers 52 bzw. 72. Dort können Anwenderprofile und persönliche Einstellungen von Operatoren/Bedienern der Prozessanlage hinterlegt werden. Diese können auch für weitere Operatoren/Bediener zugänglich sein. Der Anwenderselektionsdienst 60 bzw. 60' hat Zugriff auf den Anwenderselektionsbereich 11 bzw. 31, in welchem, wie anhand der Figuren 1 bis 6 erläutert, Informationen zu den von einem Operator erfassten und in dem Speicher 58 bzw. 58' hinterlegten Operator View Persistenzen, **d.h.** Zustände OVP von Visualisierungen, visuell aufgeführt sind.

Auf dem Operator Station Client 51 sind als zentrales Element die Visualisierung 1 mit dem Anlagenbild 5, den Faceplates 3, 4, der Trendverlaufsanzeige 8 und der Meldefolgenanzeige 9 dargeboten. Weiterhin sind auf dem Operator Station Client 51 die Anwenderselektionssicht 11, das Operator-Eingabefeld 10 und das Alarmfeld 13 dargeboten.

In entsprechender Weise ist auf dem als 4-Quadranten-Großanzeige ausgebildeten Operator Station Client 71 als zentrales Element die Vier-Quadranten-Anzeige 21 mit den Anlagenvisualisierungen 22, 23, 24, 25 dargeboten. Weiterhin sind auch auf dem Operator Station Client 71 eine Anwenderselektionssicht 31, ein Operator-Eingabefeld 30 und ein Alarmfeld 33 dargeboten.

Die Speicher 58, 58' sind dabei mit Hilfe des Verteilungsdienstes 59 bzw. 59' miteinander repliziert, **d.h.** die gesamte Menge der gespeicherten Daten wird von dem Verteilungsdienst 59 bzw. 59' in den Speichern 58, 58' kontinuierlich abgeglichen und somit inhaltsgleich gehalten. Ein Operator bzw. Operator Station Client hat dann, unabhängig davon, bei welchem Operator Station Server er sich anmeldet, Zugriff auf sämtliche von ihm hinterlegten oder an ihn weitergeleiteten Persistenzen.

Ein Zustand der Anlagenvisualisierung 1 auf dem Operator Station Client 51 wird wie folgt erfasst und in dem Speicher 58 hinterlegt:
Schritt I: Der Operator O1 triggert, manuell über das Auswahlfeld 2 (siehe FIG 1) die Erfassung des Zustandes der Visualisierung (Persistenz) eines Anlagenzustandes zu einem bestimmten (ersten) Zeitpunkt über den Operator Station Client 51. Dieser Trigger wird von einer Steuerungskomponente 61 des Operator Station Servers 52 erfasst.
Schritt II: Die Steuerungskomponente 61 erfasst einen durch ein Anzeige-Objekt-Modell (Screen Object Model) 62 definierten Visualisierungszustand und übergibt ihn dem Anwenderselektionsdienst 60, der diesen automatisch mit Zusatzdaten wie Typ, Name des Operators, Datum/Zeit und ggf. einem Kommentar des Operators in einem dem Operator O1 für eine Hinterlegung von Persistenzen zugeordneten Bereich des Speichers 58 ablegt. Durch den Anwender Selektions-Manager 57 erfolgt unter Nutzung des Verteilungsdienst 59 automatisch eine Replikation der abgelegten Persistenz in den Speicher 58'. Eine Information über die abgelegte Persistenz OVP1 wird dem Operator O1 in der Anwenderselektionssicht 11 in der Kategorie der hinterlegten Operator View Persistenzen OVP visuell aufgeführt.
Schritt III: Der Operator O1 triggert manuell über die Auswahlfenster 13, 14 in der Anwenderselektionssicht 11 (siehe auch FIG 3) eine Weiterleitung der hinterlegten Persistenz OVP1 an den Empfänger O2. Da für jeden in dem Leitsystem angemeldeten Operator eine Anwenderselektion erstellt wird, kann der Anwenderselektionsdienst 60' ermitteln, welche Operatoren in dem Leitsystem angemeldet sind und dem Operator O1 nur angemeldete Operatoren zur Auswahl anbieten. Der Anwenderselektionsdienst 60' kann dabei auch nur solche Operatoren zur Auswahl anbieten, die eine Berechtigung zum Zugriff auf die Persistenz OVP1 haben.

Der Anwenderselektionsdienst 60 ordnet nun die hinterlegte Persistenz OVP1 dem Operator 2 als Empfänger zu, in dem er eine Kopie der Persistenz OVP1 in einem Bereich des Speichers 58 hinterlegt, der dem Operator O2 für Weiterleitungen von Persistenzen zugeordnet ist. Durch den Anwender Selektions-Manager 57 erfolgt unter Nutzung des Verteilungsdienst 59 automatisch eine Replikation der weitergeleiteten Persistenz in den Speicher 58'. Eine Information über die weitergeleitete Persistenz OVP1 wird dem Operator O2 in der Anwenderselektionssicht 31 in der Kategorie der weitergeleiteten Operator View Persistenzen FOVP visuell aufgeführt (siehe auch FIG 4).

Schritt IV: Wenn der Operator O2 den Zustand der Visualisierung der weitergeleiteten Persistenz OVP1 abrufen und auf dem Operator Station Client 72 dargeboten haben möchte, triggert er über den Anwenderselektionsbereich 31 den Anwenderselektionsdienst 60' und wählt in dem Fenster 33 für die Persistenz OVP1 die Option "O" für ein Öffnen aus. Alternativ kann der Operator O2 dem Anwenderselektionsdienst 60' auch vorgeben, die Persistenz OVP1 automatisch zu öffnen (siehe FIG 6). Da es sich bei dem Operator Station Client 71 um eine Vier-Quadranten-Anzeige handelt, wird in der Anwenderselektionssicht 31 von dem Anwenderselektionsdienst 60' von dem Operator O1 noch eine Information zu dem Quadranten eingeholt, in dem die weitergeleitete Persistenz OVP1 zur Anzeige gebracht werden soll (siehe FIG 5 und 6).

Schritt V: Der Anwenderselektionsdienst 60' liest die Persistenz OVP1 aus dem Speicher 58' aus und erzeugt daraus mittels der Steuerungskomponente 61' ein Anzeige-Objekt-Modell (Screen Object Model) 62'.

Schritt VI: Der Visualisierungsdienst 54' bringt auf Basis des Anzeige-Objekt-Modells 62' nun auf dem Operator Station Client 71 den weitergeleiteten Zustand der Visualisierung 1 zur Anzeige, d.h. die Visualisierung 1 wird dort reproduziert. Im Fall eines automatischen Öffnens der Persistenz OVP1 kann vor der Anzeige noch eine Abfrage bei dem Operator O2 erfolgen, ob die Anzeige erfolgen soll.

Mit der Erfindung kann somit eine effiziente Kollaboration von mehreren unterschiedlichen Operatoren bei der Bedienung und Beobachtung der technischen Anlage erfolgen. Es können tatsächlich in der Anlage zu einem bestimmten Zeitpunkt (z.B. zu dem ersten Zeitpunkt oder kurz davor) vorliegenden Visualisierungen von Anlagenzuständen zwischen Operatoren ausgetauscht werden. Operatoren können sich hierdurch bei Bedarf bei der Bedienung und Beobachtung gegenseitig unterstützen. Dies gilt insbesondere bei der oft aufwendigen Ursachenanalyse für Alarme und bei der Suche nach Anomalien, welche auf Basis des tatsächlich in der Anlage vorliegenden Zustandes (z.B. Werte von Prozessvariablen, Stellwerte, Regelgrößen, Messwerte, Alarme, Operatoreingaben etc.) erfolgen müssen.

Erkennt beispielsweise der Operator O1 in einem ihm dargebotenen Anlagenbild mit weiteren geöffneten Bildfenstern, wie z.B. Meldefolge- oder Trendanzeigen, eine Anomalie und möchte er den Operator O2 zur Beurteilung mit einbeziehen, so kann er seine gegenwärtige Visualisierung mit allen geöffneten Bildfenstern und Einstellungen an den Operator O2 übertragen, auch wenn dieser gegenwärtig nicht verfügbar ist, oder sich an einem völlig anderen Ort befindet. Zu diesem Zwecke kann der Operator O1 den Zustand seiner gegenwärtigen Visualisierung persistieren und mit dem Operator O2 teilen, so dass dieser in der Lage ist, die übergebene Visualisierung in seiner jeweiligen Umgebung (Leitwarte, unterwegs, mobiles Endgerät, usw.) exakt nachzustellen.

## Patentansprüche

1. Leitsystem (50) für eine technische Anlage (100), insbesondere Fertigungs- oder Prozessanlage, das wenigstens einen Operator Station Server (52) und wenigstens einen mit dem Operator Station Server verbundenen Operator Station Client (51) umfasst, wobei der Operator Station Server (52) dazu ausgebildet ist, Visualisierungsinformationen an den Operator Station Client (51) zu übertragen, und wobei der Operator Station Client (51) dazu ausgebildet ist, anhand der Visualisierungsinformationen eine Visualisierung (1) für einen Operator zur Bedienung und Beobachtung der technischen Anlage (100) zu erzeugen,
wobei das Leitsystem (50) dazu ausgebildet ist, zur Laufzeit der technischen Anlage (100) auf Veranlassung eines ersten Operators (O1) zur Bedienung und Beobachtung der technischen Anlage (100) zu zumindest einem ersten Zeitpunkt einen zu diesem Zeitpunkt von einem ersten der Operator Station Clients (51) erzeugten aktuellen Zustand der Visualisierung (1) eines Anlagenzustandes zu erfassen und in einem, vorzugsweise nichtflüchtigen, ersten Speicher (58) zu hinterlegen,
- wobei das Erfassen des Zustandes der Visualisierung ein Erfassen von Eingaben des ersten Operators (01) zur Erzeugung des aktuellen Zustandes der Visualisierung (1) umfasst, und wobei das Hinterlegen des Zustandes ein Hinterlegen der erfassten Eingaben umfasst, **dadurch gekennzeichnet,dass** das Leitsystem (50) dazu ausgebildet ist, über den ersten Operator Station Client (51) eine Information zu zumindest einem zweiten Operator (O2) zur Bedienung und Beobachtung der technischen Anlage (100) als Empfänger für den hinterlegten Zustand der Visualisierung (1) von dem ersten Operator (O1) entgegenzunehmen und hierdurch den in dem ersten Speicher hinterlegten Zustand der Visualisierung (1) diesem zweiten Operator zuzuordnen.

2. Leitsystem (50) nach Anspruch 1, das dazu ausgebildet ist, zur Laufzeit der technischen Anlage (100) auf Veranlassung des ersten Operators (O1) zu mehreren verschiedenen ersten Zeitpunkten den zu dem jeweiligen Zeitpunkt auf dem ersten Operator Station Client (51) jeweils aktuellen Zustand der Visualisierung (1) eines Anlagenzustandes in der technischen Anlage (100) zu erfassen und in dem Speicher (58) zu hinterlegen,
- wobei der Speicher (58) ausgebildet ist, sämtliche Zustände der Visualisierung (1) der mehreren verschiedenen ersten Zeitpunkte zu speichern, und
- wobei das Leitsystem (50) ausgebildet ist, über den ersten Operator Station Client (51) für jeden der hinterlegten Zustände der Visualisierung (1) jeweils eine Information zu einem zweiten Operator (O2) als Empfänger des hinterlegten Zustandes der Visualisierung (1) von dem ersten Operator (O1) entgegenzunehmen und hierdurch den in dem Speicher (58) hinterlegten Zustand der Visualisierung (1) diesem zweiten Operator (O2) zuzuordnen.

3. Leitsystem (50) nach einem der vorangegangenen Ansprüche, das dazu ausgebildet ist, auf eine Anforderung des zweiten Operators (O2) zu einem zweiten Zeitpunkt, der von dem ersten Zeitpunkt bzw. den mehreren ersten verschiedenen Zeitpunkten unterschiedlich ist, den Zustand der Visualisierung (1) aus dem ersten Speicher (58) oder einem mit dem ersten Speicher replizierten zweiten Speicher (58') abzurufen und eine zu dem zweiten Zeitpunkt aktuell dem zweiten Operator (O2) durch einen der Operator Station Clients (71) dargebotene Visualisierung (21) in den aus dem Speicher (58') abgerufenen Zustand zu bringen.

4. Leitsystem (50) nach Anspruch 1 oder 2, welches dazu ausgebildet ist, automatisiert den Zustand der Visualisierung (1) aus dem ersten Speicher (58) oder einem mit dem ersten Speicher replizierten zweiten Speicher (58') abzurufen und die zu dem zweiten Zeitpunkt aktuell dem zweiten Operator (O2) durch einen der Operator Station Clients (71) dargebotene Visualisierung (1) in den aus dem Speicher (58') abgerufenen Zustand zu bringen, wobei das Leitsystem (50) vorzugsweise dazu ausgebildet ist, vor der Aktualisierung eine Abfrage an den zweiten Operator (O2) zu erzeugen, ob die Aktualisierung vorgenommen werden soll.

5. Leitsystem (50) nach einem der vorhergehenden Ansprüche, bei dem der Zustand der Visualisierung (1) eine zu dem ersten Zeitpunkt erfolgende grafische Wiedergabe eines Anlagenbildes (5) der technischen Anlage (100), eine Trendanzeige (8) eines Messwertes aus der technischen Anlage, ein Faceplate (3, 4), eine Meldefolgenanzeige (9), eine nicht gesicherte Eingabe des ersten Operators (O1) in einem Textfeld und/oder einen von dem ersten Operator (O1) eingestellten Stellwert eines Reglers umfasst.

6. Leitsystem (50) nach einem der vorhergehenden Ansprüche, welches dazu ausgebildet ist, zur Laufzeit der Anlage in dem Leitsystem (50) angemeldete Operatoren automatisch zu ermitteln und dem ersten Operator (O1) als Empfänger für den hinterlegten Zustand der Visualisierung (1) zur Auswahl anzubieten.

7. Leitsystem (50) nach Anspruch 6, bei dem den Operatoren Zugriffsrechte für Visualisierungen (1) zugewiesen sind und das dazu ausgebildet ist, dem ersten Operator (O1) nur diejenigen Operatoren als Empfänger zur Auswahl anzubieten, die ein Zugriffsrecht für die jeweils hinterlegte Visualisierung (1) haben.

8. Leitsystem (50) nach einem der vorhergehenden Ansprüche, welches dazu ausgebildet ist, von dem ersten Operator (O1) in dem Speicher (58 bzw. 58') hinterlegte Zustände von Visualisierungen (1) zu ermitteln, für jeden der ermittelten hinterlegten Zustände eine Information zu erzeugen und diese Information dem ersten Operator (1) visuell darzustellen.

9. Leitsystem (50) nach einem der vorhergehenden Ansprüche, welches dazu ausgebildet ist, für den zweiten Operator (O2) als Empfänger in dem Speicher (58 bzw. 58') hinterlegte Zustände von Visualisierungen zu ermitteln, für jeden der ermittelten hinterlegten Zustände eine Information zu erzeugen und diese Information dem zweiten Operator (O2) visuell darzustellen.

10. Leitsystem (50) nach einem der vorhergehenden Ansprüche, wobei es einen Anwenderselektionsdienst aufweist, der zu einem ersten Teil auf dem wenigstens einen Operation Station Server (52, 72) und zu einem zweiten Teil auf dem wenigstens einen Operator Station Client (51, 71) implementiert ist, und der ausgebildet ist, die in dem Speicher (58 bzw. 58') hinterlegten Zustände von Visualisierungen zu ermitteln, für jeden der ermittelten hinterlegten Zustände eine Information zu erzeugen und diese Information dem Operator (O1 bzw. O2) visuell darzustellen.

11. Leitsystem (50) nach einem der vorhergehenden Ansprüche, wobei der erste Speicher (58) ein, vorzugsweise nichtflüchtiger, Speicherbereich des Operator Station Server (52) ist.

12. Leitsystem (50) nach einem der vorhergehenden Ansprüche, wobei es mehrere Operator Station Server (52, 72) mit jeweils einem Speicher (58, 58') zur Hinterlegung von Zuständen von Visualisierungen umfasst, wobei die Speicher (58, 58') miteinander repliziert sind.

13. Leitsystem (50) nach einem der vorhergehenden Ansprüche, wobei der wenigstens eine Operator Station Client (11) dazu ausgebildet ist, in mehreren Feldern, die vorzugsweise neben und/oder untereinander angeordnet sind, jeweils unterschiedliche Visualisierungen (22, 23, 34, 25) darzubieten, und von dem zweiten Operator (O2) eine Information entgegenzunehmen, in welchem der Felder eine dort aktuell dem zweiten Operator (O2) durch den Operator Station Client (71) dargebotene Visualisierung (1) in den aus dem Speicher (58 bzw. 58') abgerufenen Zustand zu bringen ist.

14. Verfahren zum Betreiben eines Leitsystems (50) einer technischen Anlage (100), insbesondere Fertigungs- oder Prozessanlage, das wenigstens einen Operator Station Server (52, 72)) und wenigstens einen Operator Station Client (51, 71) umfasst, wobei der Operator Station Server (52, 72) dazu ausgebildet, Visualisierungsinformationen an den Operator Station Client (51, 71) zu übertragen, und wobei der Operator Station Client (51, 71) dazu ausgebildet ist, anhand der Visualisierungsinformationen eine Visualisierung (1) für einen Operator zur Bedienung und Beobachtung der technischen Anlage (100) zu erzeugen, das Verfahren umfassend:
a) Zu einem ersten Zeitpunkt von einem ersten Operator (O1) zur Bedienung und Beobachtung der technischen Anlage (100) Entgegennehmen einer Anforderung, einen aktuellen Zustand der Visualisierung (1) eines Anlagenzustandes zu erfassen, sowie einer Information zu zumindest einem zweiten Operator (O2) zur Bedienung und Beobachtung der technischen Anlage (100) als Empfänger für den Zustand der Visualisierung (1)
b) Hinterlegen des Zustandes in einem ersten Speicher (58), wobei der hinterlegte Zustand dem zweiten Operator (O2) zugeordnet wird,
wobei das Erfassen des Zustandes der Visualisierung (1) ein Erfassen von Eingaben des ersten Operators (O1) zur Erzeugung des aktuellen Zustandes der Visualisierung (1) umfasst, und wobei das Hinterlegen des Zustandes ein Hinterlegen der erfassten Eingaben umfasst.

15. Verfahren nach Anspruch 14, bei dem die Schritte a) bis d) für mehrere verschiedene erste Zeitpunkten durchlaufen werden, wobei sämtliche Zustände der Visualisierung (1) in dem Speicher hinterlegt werden.

16. Verfahren nach Anspruch 14 oder 15, bei dem auf eine Anforderung des zweiten Operators (O2) zu einem zweiten Zeitpunkt, der von dem ersten Zeitpunkt bzw. den mehreren ersten verschiedenen Zeitpunkten unterschiedlich ist, der Zustand der Visualisierung (1) aus dem ersten Speicher (58) oder einem mit dem ersten Speicher (58) replizierten zweiten Speicher (58') abgerufen und die zu dem zweiten Zeitpunkt aktuell dem zweiten Operator (O2) durch einen der Operator Station Clients (51, 71) dargebotene Visualisierung (1) in den aus dem Speicher (58 bzw. 58') abgerufenen Zustand gebracht wird.

17. Verfahren nach Anspruch 14 oder 15, bei dem das Leitsystem (50) automatisiert den Zustand der Visualisierung (1) aus dem ersten Speicher (58) oder einem mit dem ersten Speicher (58) replizierten zweiten Speicher (58') abruft und die aktuell dem zweiten Operator (O2) durch einen der Operator Station Clients (51, 71) dargebotene Visualisierung (1) in den aus dem Speicher (58 bzw. 58') abgerufenen Zustand bringt, wobei vorzugsweise das Leitsystem (50) vor der Aktualisierung eine Abfrage an den zweiten Operator (O2) erzeugt, ob die Aktualisierung vorgenommen werden soll.

## Claims

1. Control system (50) for a technical installation (100), in particular, a production or processing installation, which comprises at least one operator station server (52) and at least one operator station client (51) connected to the operator station server, wherein the operator station server (52) is configured to transfer visualisation information to the operator station client (51) and wherein the operator station client (51) is configured to generate, on the basis of the visualisation information, a visualisation (1) for an operator of the technical installation (100),
wherein
the control system (50) is configured, during the runtime of the technical installation (100), at the instigation of a first operator (O1) for operating and observing the technical installation (100) at at least one first time point, to acquire a current state of the visualisation (1) of an installation state that is generated at this time point by a first of the operator station clients (51) and to deposit it in a, preferably non-volatile, first memory store (58),
- wherein the acquisition of the state of the visualisation comprises an acquisition of inputs by the first operator (O1) for generating the current state of the visualisation (1) and wherein the depositing of the state comprises a depositing of the acquired inputs, **characterised in that**
- the control system (50) is configured to receive from the first operator (O1), via the first operator station client (51), an information item relating to at least one second operator (O2) for operating and observing the technical installation (100) as the recipient for the deposited state of the visualisation (1) and thereby to assign the state of the visualisation (1) deposited in the first memory store to this second operator.

2. Control system (50) according to claim 1, which is configured, at the runtime of the technical installation (100) at the instigation of the first operator (O1), at a plurality of different first time points, to acquire, at each time point on the first operator station client (51), the respective current state of the visualisation (1) of an installation state in the technical installation (100) and to deposit it in the memory store (58),
- wherein the memory store (58) is configured to store all the states of the visualisation (1) of the plurality of different first time points, and
- wherein the control system (50) is therein configured to receive from the first operator (O1), via the first operator station client (51), for each of the deposited states of the visualisation (1), an information item relating to a second operator (O2) as the recipient of the deposited state of the visualisation (1) and thereby to assign the state of the visualisation (1) deposited in the memory store (58) to this second operator (O2).

3. Control system (50) according to one of the preceding claims, which is configured, on a request by the second operator (O2) at a second time point that is different from the first time point or from the plurality of first different time points, to retrieve the state of the visualisation (1) from the first memory store (58) or from a second memory store (58') replicated with the first memory store and to bring a visualisation (21) currently being presented at the second time point to the second operator (O2) by one of the operator station clients (71) to the state retrieved from the memory store (58').

4. Control system (50) according to claim 1 or 2, which is configured to retrieve automatically the state of the visualisation (1) from the first memory store (58) or from a second memory store (58') replicated with the first memory store and to bring the visualisation (1) currently being presented at the second time point to the second operator (O2) by one of the operator station clients (71) to the state retrieved from the memory store (58'), wherein the control system (50) is preferably configured, before the updating, to generate a request to the second operator (O2) as to whether the updating should be performed.

5. Control system (50) according to one of the preceding claims, wherein the state of the visualisation (1) comprises a graphical reproduction, taking place at the first time point, of an installation image (5) of the technical installation (100), a trend indication (8) of a measurement value from the technical installation, a faceplate (3, 4), a notification sequence indication (9), an unsecured input by the first operator (O1) in a text field and/or a setpoint value of a regulator set by the first operator (O1).

6. Control system (50) according to one of the preceding claims, which is configured to establish automatically operators registered in the control system (50) at the runtime of the installation and to offer them to the first operator (O1) as recipients for the deposited state of the visualisation (1) for selection.

7. Control system (50) according to claim 6, wherein the operators are assigned access rights for visualisations (1) and the control system is configured to offer to the first operator (O1) only those operators as recipients for selection who have an access right for the respective deposited visualisation (1).

8. Control system (50) according to one of the preceding claims, which is configured to establish states of visualisations (1) deposited by the first operator (O1) in the memory store (58 or 58'), to generate an information item for each of the established deposited states, and to represent this information item visually to the first operator (1).

9. Control system (50) according to one of the preceding claims, which is configured to establish states of visualisations deposited in the memory store (58 or 58') for the second operator (O2) as recipient, to generate an information item for each of the established deposited states, and to represent this information item visually to the second operator (O2).

10. Control system (50) according to one of the preceding claims, wherein it has a user selection service, a first part of which is implemented on the at least one operator station server (52, 72) and a second part of which is implemented on the at least one operator station client (51, 71), and which is configured to establish the states deposited in the memory store (58 or 58') of visualisations, to generate an information item for each of the established deposited states, and to represent this information item visually to the operator (O1 or O2).

11. Control system (50) according to one of the preceding claims, wherein the first memory store (58) is a, preferably non-volatile, storage region of the operator station server (52).

12. Control system (50) according to one of the preceding claims, wherein it comprises a plurality of operator station servers (52, 72), each having a memory store (58, 58') for depositing states of visualisations, wherein the memory stores (58, 58') are replicated with one another.

13. Control system (50) according to one of the preceding claims, wherein the at least one operator station client (11) is configured to present, in a plurality of fields that are preferably arranged beside and/or under one another, respectively different visualisations (22, 23, 34, 25) and to receive, from the second operator (O2), an information item regarding in which of the fields a visualisation (1) currently being presented there to the second operator (O2) by the operator station client (71) is to be brought into the state retrieved from the memory store (58 or 58').

14. Method for operating a control system (50) of a technical installation (100), in particular, a production or processing installation, which comprises at least one operator station server (52, 72) and at least one operator station client (51, 71), wherein the operator station server (52, 72) is configured to transfer visualisation information to the operator station client (51, 71) and wherein the operator station client (51, 71) is configured to generate, on the basis of the visualisation information, a visualisation (1) for an operator for operating and observing the technical installation (100), the method comprising:
a) at a first time point, receiving a request from a first operator (O1) for operating and observing the technical installation (100) to acquire a current state of the visualisation (1) of an installation state, and an information item regarding at least one second operator (O2) for operating and observing the technical installation (100) as the recipient of the state of the visualisation (1),
b) depositing the state in a first memory store (58), wherein the deposited state is assigned to the second operator (O2),
wherein the acquisition of the state of the visualisation (1) comprises an acquisition of inputs by the first operator (O1) for generating the current state of the visualisation (1) and wherein the depositing of the state comprises a depositing of the acquired inputs.

15. Method according to claim 14, in which the steps a) to d) are run through for a plurality of different first time points, wherein all the conditions of the visualisation (1) are deposited in the memory store.

16. Method according to claim 14 or 15, in which, on a request by the second operator (O2) at a second time point that is different from the first time point or from the plurality of first different time points, the state of the visualisation (1) is retrieved from the first memory store (58) or from a second memory store (58') replicated with the first memory store (58) and the visualisation (1) currently being presented at the second time point to the second operator (O2) by one of the operator station clients (51, 71) is brought into the state retrieved from the memory store (58 or 58').

17. Method according to claim 14 or 15, in which the control system (50) automatically retrieves the state of the visualisation (1) from the first memory store (58) or from a second memory store (58') replicated with the first memory store (58) and brings the visualisation (1) currently being presented to the second operator (O2) by one of the operator station clients (51, 71) into the state retrieved from the memory store (58 or 58'), wherein before the updating, the control system (50) preferably generates a request to the second operator (O2) as to whether the updating should be performed.

## Revendications

1. Système (50) de commande d'une installation (100) technique, en particulier d'une installation de fabrication ou de processus, qui comprend au moins un operator station server (52) et au moins un operator station client (51) relié à l'operator station server, dans lequel l'operator station server (52) est constitué pour transmettre des informations de visualisation à l'operator station client (51), et dans lequel l'operator station client (51) est constitué pour, à l'aide des informations de visualisation, produire pour la commande et l'observation de l'installation (100) technique, une visualisation (1) pour un opérateur,
dans lequel
le système (50) de commande est constitué, pour détecter pendant le temps de fonctionnement de l'installation (100) technique, à l'instigation d'un premier opérateur (O1) pour la commande et l'observation de l'installation (100) technique, à au moins un premier instant, un état en cours, produit par un premier des operator station client (51), de la visualisation (1) d'un état de l'installation et pour le mettre dans une première mémoire (58), de préférence non volatile,
- dans lequel la détection de l'état de la visualisation comprend pour la production de l'état en cours de la visualisation (1), une détection d'entrées du premier opérateur (O1), et dans lequel la mise en mémoire de l'état comprend la mise en mémoire des entrées détectées, **caractérisé en ce que**
- le système (50) de commande est constitué, pour recevoir du premier opérateur (O1), en passant par le premier operator station client (51), une information à au moins un deuxième opérateur (02) de commande et d'observation de l'installation (100) technique comme récepteur de l'état mis en mémoire de la visualisation (1) et affecté ainsi à ce deuxième opérateur, l'état de visualisation (1) mis dans la première mémoire.

2. Système (50) de commande suivant la revendication 1, **caractérisé en ce que** pendant le temps de fonctionnement de l'installation (100) technique, à l'instigation du premier opérateur (O1) à plusieurs premiers instants différents, détecter sur le premier operator station client (51) respectivement un état en cours de la visualisation (1) d'un état de l'installation dans l'installation (100) technique et le mettre dans la mémoire (58),
- dans lequel la mémoire (58) est constituée pour mettre en mémoire l'ensemble des états de la visualisation (1) aux plusieurs premiers instants différents, et
- dans lequel le système (50) de commande est constitué pour, en passant par le premier operator station client (51), recevoir du premier opérateur (O1), pour chacun des états mis en mémoire de la visualisation (1) respectivement une information destinée à un deuxième opérateur (O2) comme récepteur de l'état reçu de la visualisation (1) et affecter ainsi à ce deuxième opérateur (O2) l'état de la visualisation (1) mis dans la mémoire (58).

3. Système (50) de commande suivant l'une des revendications précédentes, qui est constitué pour, à la demande du deuxième opérateur (O2) à un deuxième instant, qui est différent du premier instant ou des premiers plusieurs premiers instants différents, appeler l'état de la visualisation (1) dans la première mémoire (58) ou dans une deuxième mémoire (58') répliquant la première mémoire et porter dans l'état appelé dans la mémoire (58') une visualisation (21) représentée au deuxième instant en cours au deuxième opérateur (O2) par l'un des operator station client (71).

4. Système (50) de commande suivant la revendication 1 ou 2, qui est constitué, pour appeler dans la première mémoire (58) ou dans une deuxième mémoire (58') répliquant la première mémoire, de manière automatisée, l'état de la visualisation (1) est porté dans l'état appelé de la mémoire (58'), la visualisation (1) représentée au deuxième instant en cours au deuxième opérateur (O2) par l'un des operator station client (71), dans lequel de préférence le système (50) de commande est constitué pour produire avant la mise à jour une demande au deuxième operator (O2) sur le point de savoir, si la mise à jour doit être effectuée.

5. Système (50) de commande suivant l'une des revendications précédentes, dans lequel l'état de la visualisation (1) comprend une reproduction graphique, s'effectuant au premier instant, d'une image (5) d'installation de l'installation (100) technique, une indication (8) de tendance d'une valeur de mesure de l'installation technique, une faceplate (3, 4) d'une indication (9) de suivi de messages, une entrée non sécurisée du premier opérateur (O1) dans un champ de texte et/ou une valeur de réglage réglée par le premier opérateur (O1).

6. Système (50) de commande suivant l'une des revendications précédentes, qui est constitué pour, pendant le temps de fonctionnement de l'installation, déterminer automatiquement des opérateurs annoncés dans le système (50) de commande et les offrir en choix au premier opérateur (O1) comme récepteur de l'état mis en mémoire de la visualisation (1).

7. Système (50) de commande suivant la revendication 6, dans lequel des droits d'accès à des visualisations (1) sont affectés aux opérateurs et, qui est conçu pour offrir en choix au premier opérateur (O1), seulement les opérateurs comme récepteur, qui ont un droit d'accès à la visualisation (1) mise respectivement en mémoire.

8. Système (50) de commande suivant l'une des revendications précédentes, qui est constitué pour déterminer des états de visualisations (1) mis en mémoire par le premier opérateur (O1) dans la mémoire (58) et respectivement (58'), produire pour chacun des états mis en mémoire, déterminer une information et représenter visuellement cette information au premier opérateur (1).

9. Système (50) de commande suivant l'une des revendications précédentes, qui est constitué pour déterminer des états de visualisations mis dans la mémoire (58) et respectivement (58') pour le deuxième opérateur (O2) comme récepteur, produire pour chacun des états mis en mémoire, déterminer une information et représenter visuellement cette information au deuxième opérateur (O2).

10. Système (50) de commande suivant l'une des revendications précédentes, dans lequel il a un service de sélection d'utilisateur, qui est mis en œuvre pour une première partie sur le au moins un operation station server (52, 72) et pour une deuxième partie sur le au moins un operator station client (51, 71) et, qui est constitué, pour déterminer des états de visualisations mis dans la mémoire (58) ou respectivement (58'), produire pour chacun des états mis en mémoire, déterminer une information et représenter visuellement cette information à l'opérateur (O1) ou respectivement (O2).

11. Système (50) de commande suivant l'une des revendications précédentes, dans lequel la première mémoire (58) est une partie de mémoire, de préférence non volatile de l'operator station server (52).

12. Système (50) de commande suivant l'une des revendications précédentes, dans lequel il comprend plusieurs operator station server (52, 72) ayant respectivement une mémoire (58, 58') de mise en mémoire d'états de visualisations, les mémoires (58, 58') étant répliquées entre elles.

13. Système (50) de commande suivant l'une des revendications précédentes, dans lequel le au moins un operator station client (11) est constitué pour représenter respectivement des visualisations (22, 23, 34, 25) différentes dans plusieurs champs, qui sont disposés de préférence les uns à côté des autres et/ou les uns en dessous des autres, et pour recevoir du deuxième opérateur (O2) une information sur celui des champs à porter dans l'état appelé dans la mémoire (58) et respectivement (58') une visualisation (1) représentée, qui est représentée en cours au deuxième opérateur (O2) par l'operator station client (71).

14. Procédé pour faire fonctionner un système (50) de commande des installations (100) techniques, en particulier d'une installation de fabrication ou de processus, qui comprend au moins un operator station server (52, 72)) et au moins un operator station client (51, 71) relié à l'operator station server, dans lequel l'operator station server (52, 72) est constitué pour transmettre des informations de visualisation à l'operator station client (51, 71), et dans lequel l'operator station client (51, 71) est constitué pour, à l'aide des informations de visualisation, produire pour la commande et l'observation de l'installation (100) technique, une visualisation (1) pour un opérateur, le procédé comprenant :
a) recevoir un premier instant d'un premier opérateur (O1) de commande et d'observation de l'installation (100) technique, une demande de détection d'un état en cours de la visualisation (1) d'un état de l'installation, ainsi qu'une information sur au moins un deuxième opérateur (O2) de commande et d'observation de l'installation (100) technique comme récepteur de l'état de la visualisation (1)
b) mettre l'état dans une première mémoire (58), l'état mis en mémoire étant affecté au deuxième opérateur (O2),
dans lequel la détection de l'état de la visualisation (1) comprend une détection d'entrées du premier opérateur (O1) pour la production de l'état en cours de la visualisation (1), et dans lequel la mise en mémoire de l'état comprend une mise en mémoire des entrées détectées.

15. Procédé suivant la revendication 14, dans lequel on effectue les stades a) à d) pour plusieurs premiers instants différents, dans lequel on met dans la mémoire l'ensemble des états de la visualisation (1).

16. Procédé suivant la revendication 14 ou 15, dans lequel, sur une demande du deuxième opérateur (O2) à un deuxième instant, qui est différent du premier instant ou des plusieurs premiers instants différents, on appelle dans la première mémoire (58) ou dans une deuxième mémoire (58') répliquant la première mémoire (58), l'état de la visualisation (1) et on porte dans l'état appelé dans la mémoire (58) et respectivement (58'), la visualisation (1) représentée au deuxième instant en cours au deuxième opérateur (O2) par l'un des operator station client (51, 71).

17. Procédé suivant la revendication 14 ou 15, dans lequel le système (50) de commande appelle de manière automatisée l'état de la visualisation (1) dans la première mémoire (58) ou dans une deuxième mémoire (58') répliquant la première mémoire (58) et porte l'état appelé dans la mémoire (58) et respectivement (58'), la visualisation (1) en cours au deuxième opérateur (O2) par l'un des operator station client (51, 71), dans lequel de préférence le système (50) de commande produit avant la mise à jour, une demande au deuxième opérateur (O2) sur le point de savoir, si la mise à jour doit être effectuée.
